# EUROPEAN PATENT SPECIFICATION

(11) **EP 1 702 859 B1**
(45) Date of publication and mention of the grant of the patent: **15.10.2008**
(21) Application number: 06388017.3
(22) Date of filing: 16.03.2006
(51) Int. Cl.: B65D 47/10, B65D 43/02

(54) **Container lid with a removable membrane and injection moulded sealing ring, and method of manufacturing said container lid**
Behälterdeckel mit entnehmbarer Membrane und durch Spritzgussverfahren hergestellen Dichtungsring und Verfahren dafür
Couvercle de recipient avec membrane et bague d'étanchéité, la bague fabriqué par moulage par injection, et procédé de fabrication

(30) Priority: 16.03.2005 DK 200500384
(43) Date of publication of application: 20.09.2006
(73) Proprietor: Superfos A/S, 2630 Taastrup (DK)
(72) Inventor: Bitsch, Jorgen, 3400 Hillerod (DK); Koch, Mikael, 2830 Virum (DK); Noer, Torben, 8330 Beder (DK); Stensbol, Michael, 3500 Vaerlose (DK)
(74) Representative: Münzer, Marc Eric

(56) References cited:
- FR-A- 2 824 813
- US-A- 4 727 999
- US-A- 5 853 109

## Description

The current invention relates to a lid for a container and a method of manufacturing the lid. Said lid comprises an injection moulded lid body which is mountable on the container such that an air-tight seal is formed between the container and the lid body, said lid body having an opening through which the contents of the container are accessible once the lid is mounted on the container, and a membrane which closes said opening in said lid body in an air-tight manner.

In order to establish an air-tight seal between the membrane and the lid body, the membrane is typically glued or fused to the lid body after the lid body has been removed from its mould. A lid of this type is described in US patent, number 5,853,109.

However, gluing or fusing the membrane to the lid body requires an extra step in the manufacturing process of the lid. This takes extra time and requires a separate machine for performing the gluing or fusing operation. In addition, there is a risk that the membrane and the lid body are not properly sealed during the gluing or fusing operation resulting in leakage. For example, if the lid body and the membrane are not properly aligned during the gluing or fusing operation, the seal might not be properly established.

In other types of lids, the membrane is moulded as an integral part of the lid body. In this case, a weakened area is arranged between the membrane and the lid body which the user needs to tear when it is desired to remove the membrane from the lid body. One example of such a lid is disclosed by US 4,727,999. However, one disadvantage of these types of systems is that the membrane must necessarily be of the same material as the lid body. In many cases it is advantageous if the membrane and the lid body are made from two different materials. This type of manufacturing process therefore limits the choices available to the designer of the lid.

A first aspect of the current invention is therefore to provide a lid of the kind mentioned in the introductory paragraph which can be manufactured more quickly than that previously known and without the need for extra machinery.

A second aspect of the current invention is to provide a lid where the connection between the membrane and the lid body is established in such a way so that a very effective seal is ensured.

A third aspect of the current invention is to provide a lid where the membrane and the lid body could be made from different materials.

The new and unique way in which the current invention seeks to solve the above mentioned aspects is in that said lid further comprises a sealing ring which is injection moulded between the membrane and the lid body. In one example embodiment, the membrane could be inserted into the mould prior to injecting the plastic for the lid body. In another embodiment, the membrane could be moulded together with the lid body in the same mould before the sealing ring is injected into the mould.

Since the membrane and the lid body are joined together during the injection moulding process of the lid body via the sealing ring, it is not necessary to subsequently join the lid body and the membrane via gluing or fusing. This removes the need for an extra step in the manufacturing of the lid, thereby significantly increasing the speed of manufacturing. Furthermore, a separate machine is not required for gluing or fusing the membrane and the lid body together.

According to the invention, a very effective seal can be established between the membrane and the lid body. In order to optimize the effectiveness of the seal, the membrane and the lid part can be chosen from materials which fuse together with the sealing ring during the injection moulding process due to the heat present during the injection moulding process. The sealing ring could therefore be made from a different material than the membrane and/or the lid body.

In one embodiment according to the invention, the membrane could be made from a different material than the lid body. In this way, the material of the lid body can be chosen in order to optimize one criterion whereas the material of the membrane can be chosen in order to optimize other criteria. For example, the material of the lid body could be chosen to optimize the strength of the lid body and the material of the membrane could be chosen to optimize other criteria, for example the gas permeability of the membrane.

The membrane and/or the sealing ring can also comprise a weakened area in order to make it easy to remove from the lid body. In the case where the material of the sealing ring is very soft, the sealing ring itself can act as a weakened area. A pull tab can be attached to the membrane to make it even easier to remove the membrane from the lid body.

In order to make the container more tamper proof, the lid body can be formed in such a way that it is not removable from said container after it has been mounted on said container. It should be mentioned that "not removable" in the context of this application should be understood as not being "easily" removable. It is of course always possible to remove the lid body if enough force is used or of the lid body and/or the container is destroyed. However, the lid body according to this embodiment, is formed such that it is not possible to easily remove the lid body from the container.

The lid can also be formed in such a way that the material of the sealing ring covers an area of the lid which is in contact with the container when the lid is mounted on the container. This can improve the sealing between the container and the lid since the material of the sealing ring is usually chosen to be a material which has good sealing properties.

The invention will be described in more detail in the following with reference to figures which show example embodiments according to the current invention, where
Figure 1 shows a first embodiment of the current invention before assembling,
Figure 2 shows the same after assembling,

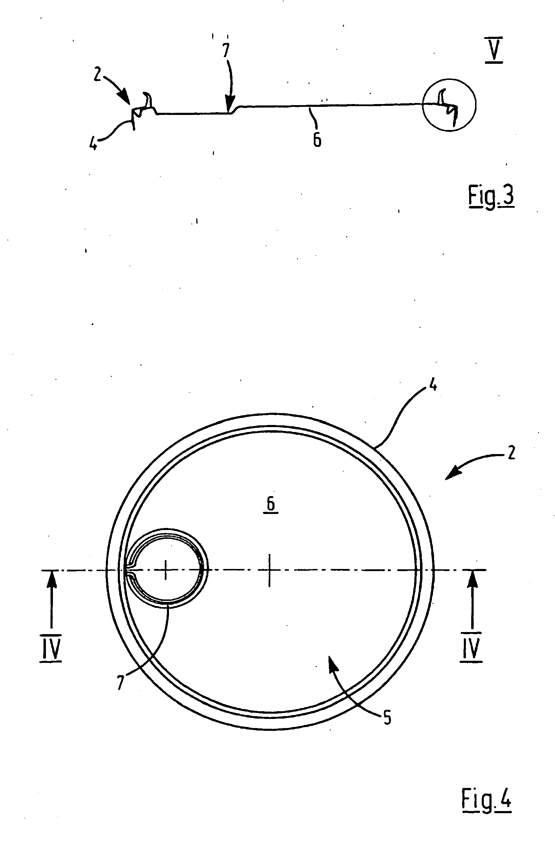

Figure 3 shows a top view of the lid shown in figures 1 and 2,
Figure 4 shows a cross section through the lid according to the line A-A shown in figure 3,
Figure 5 shows a detail view of the cross section through the lid,
Figure 6 shows a perspective view of the lid body and membrane before the sealing ring is injection moulded,
Figure 7 shows a partial cross section view of a second embodiment of a lid according to the current invention,
Figure 8 shows another embodiment of a lid,
Figure 9 shows the lid from figure 8 mounted on a container,
Figure 10 shows a cross section through the lid and container shown in figures 8 and 9, and
Figure 11 shows a partial cross section of the same.

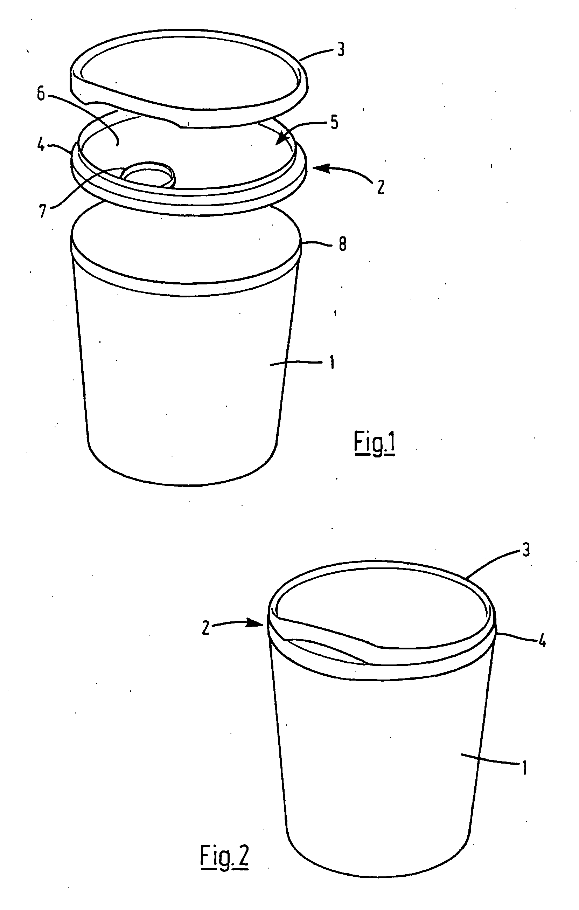

Figure 1 shows a container 1, a lid 2 and a resealing lid 3. The lid 2 comprises a lid body 4 with an opening 5. A membrane 6 seals the opening 5. The membrane is joined together with the lid body 4 in an air-tight manner around the edge of the membrane 6. A pull tab 7 arranged on the membrane 6 allows a consumer to apply tension to the membrane 6.

The lid body 4 is formed such that it can be snapped onto the rim 8 of the container 1 in such a way that an air-tight seal is formed between the lid body 4 and the container 1. In the current embodiment, the lid body is also formed in such a way that it is not possible to remove the lid body from the container once it has been snapped onto the container without occurring obvious signs of tampering. It is therefore not possible to tamper with the contents of the container without destroying the lid or removing the membrane. A user of the container will therefore be alerted if the contents of the container have been tampered with.

In the current embodiment, a resealing lid 3 is present which can be used to reseal the opening 5 in the lid body 4 once the membrane has been removed.

Figure 2 shows the lid 2 snapped onto the container 1 and the resealing lid 3 snapped onto the lid 2.

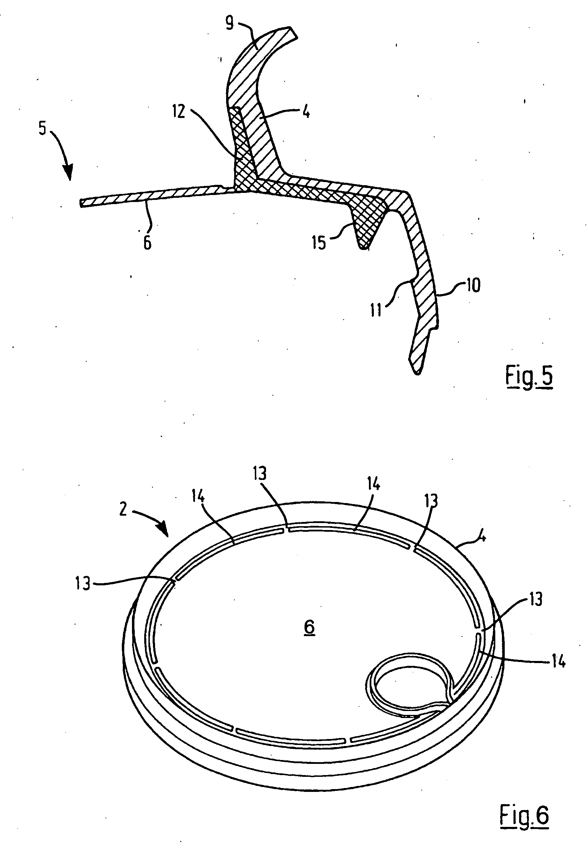

As can be seen in figure 5 the lid body comprises an upwardly protruding flange 9 onto which the resealing lid 3 can be snapped. The lid body furthermore comprises a downwardly protruding flange 10 which snaps over the rim 8 of the container 1 in order to establish an air-tight seal between the container 1 and the lid 2. The downwardly protruding flange 10 is formed with ridges 11 which prevent the lid 2 from being removed from the container 1 once it has been snapped into place.

Figure 5 also shows a sealing ring 12 located between the lid body 4 and the membrane 6. This sealing ring 12 is in this example made from a different material than the membrane 6 and the lid body 4. The material can therefore be chosen as a more flexible material with good sealing properties. In one example, the membrane 6 and the lid body 4 are made from polypropylene and the sealing ring 12 is made from Evoprene TPE. However, it should be obvious to the person skilled in the art that many other materials could also be used.

The lid 2 is manufactured in a two step injection moulding process. In the first step, the lid body 4 and the membrane 6 are injection moulded. In the second step, the sealing ring 12 is injection moulded between the membrane 6 and the lid body 4. The two injection moulding steps typically take place in the same mould. The mould is formed in such a way that after the first step, the mould is adjusted such that a new cavity is formed for the sealing ring. During the moulding of the sealing ring 12, the material of the lid body 4 and the membrane 6 located at the interface between the lid body 4, the membrane and the sealing ring 12 melts slightly and a bond is formed between the lid body 4 and the sealing ring 12, as well as between the membrane 6 and the sealing ring 12. Depending on the choice of materials and the form of the lid body at the interface, different forms of bond can be created. In the current example, a chemical bond is created due to the slight melting of the lid body 4. However, a mechanical bond could also be created if the two materials do not react with each other.

Figure 6 shows a perspective view of the lid body 4 and the membrane 6 after the first injection moulding step. This view shows that the membrane 6 and the lid body 4 are joined together by a plurality of small tabs 13 with gaps 14 there between. During the second step, the material of the sealing ring 12 is injected between the membrane 6 and the lid body 4. The material of the sealing ring 12 thereby surrounds the tabs 13 and fills the gaps 14 between the tabs 13.

When a consumer applies tension to the pull tab 7, tension is applied to the membrane 7. In this way, when the consumer pulls on the pull tab 7, the membrane 6 is pulled away from the lid body 4 and the small tabs 13 between the lid body 4 and the membrane 6 are broken. The consumer can therefore very easily remove the membrane 6 from the lid body 4. During the removal of the membrane 6, the sealing ring 12 is also torn in half. Once the membrane 6 is removed from the lid body 4, it is not possible to re-attach the membrane 6 to the lid body 4. In this way, it is very easy for a consumer to see if the contents of the container have been tampered with.

In another embodiment of the lid (not shown), the lid body and the membrane can be injection moulded such that they are not connected by small tabs. During the first step of the injection moulding process, the membrane is injection moulded via a first inlet in the mould and the lid body is injection moulded via a second inlet in the mould. In this way, there is no physical connection between the membrane and the lid body at the end of the first injection moulding step. During the second step of the injection moulding process, the material for the sealing ring is injected into the gap between the membrane and the lid body. In this way, the sealing ring binds the membrane and the lid body together.

In addition to creating an effective seal between the membrane 6 and the lid body 4, the sealing ring 12 can also be used to make the seal between the lid body 4 and the container 1 more effective. As can be seen in figure 5, the sealing ring 12 in this example embodiment has a downwardly protruding flange 15. This flange 15 ensures a proper seal at the top edge 8 of the container 1. As mentioned previously, the material of the sealing ring can be chosen with good sealing properties. In this way, the seal between the container and the lid can be improved significantly when compared to a typical connection where the hard plastic material of the lid body is in direct contact with the hard plastic material of the container.

An example use situation of the container will now be described. A container manufacturer produces the container 1, the lid 2 and the resealing lid 3 in three separate processes. The lid 2 and the resealing lid 3 are then assembled together at the factory into a lid assembly 2,3. A producer of jam purchases a number of containers 1 and lid assemblies 2,3. The jam producer fills the container 1 with jam and then snaps the lid assembly 2,3 onto the container 1. The jam is now sealed in the container 1 in an air-tight and tamper proof manner. The filled container is now sold to a consumer who removes the resealing lid 3 and then tears off the membrane 6. The consumer can then remove some of the jam from the container 1 and then reseal the container with the resealing lid 3.

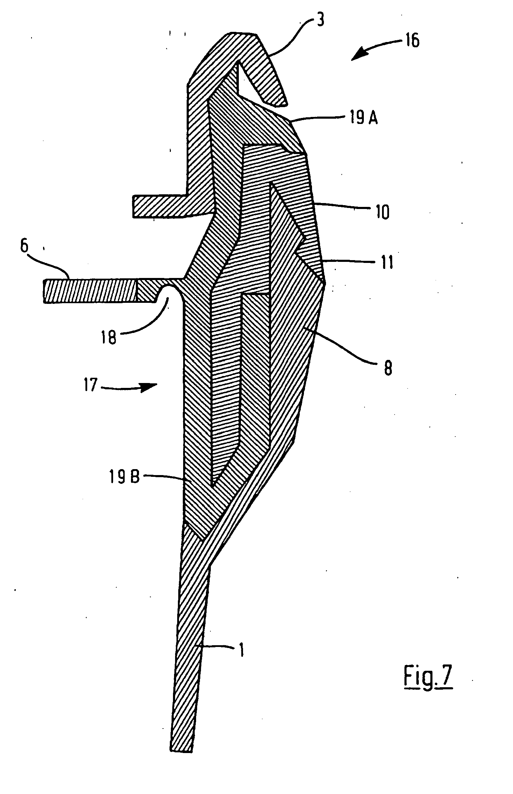

Figure 7 shows a second embodiment of a lid according to the current invention. As with the previous embodiment, the lid 16 comprises a lid body 4 made from a strong plastic material, a membrane 6 and a resealing lid 3. The lid 16 is mounted on a container 1. In order to establish a tamperproof connection between the lid 16 and the container 1, the lid body 4 is formed with a downwardly protruding flange 10 with a ridge 11. The flange 10 engages with the top edge 8 of the container 1. Due to the ridge 11, once the lid 16 is snapped onto the container 1, the lid 16 is difficult to remove from the container.

The difference between the current embodiment of the lid 16 and the previous embodiment of the lid 2, is in the form of the sealing ring 17. As before, the sealing ring 17 is injected between the membrane and the lid body 4 and in this way ensures a good air-tight connection between the lid body and the membrane. A weakened area 18 allows the membrane 6 to be torn away from the lid body 4 when the user wishes to gain access to the contents of the container.

The material of the sealing ring 17 also extends in an upwardly protruding flange 19A onto which the resealing lid 3 can be snapped. Due to the good sealing properties of the material of the sealing ring 17, the connection between the resealing lid 3 and the lid body 4 is more effective than that of the first embodiment of a lid 2.

The material of the sealing ring 17 also extends downwardly and coats 19B the lower part of the lid body 4. Since the lower part of the lid body 4, is the part which is in contact with the container 1, the presence of the sealing ring material 19B, ensures a very good air-tight and leakproof connection between the lid 16 and the container 1.

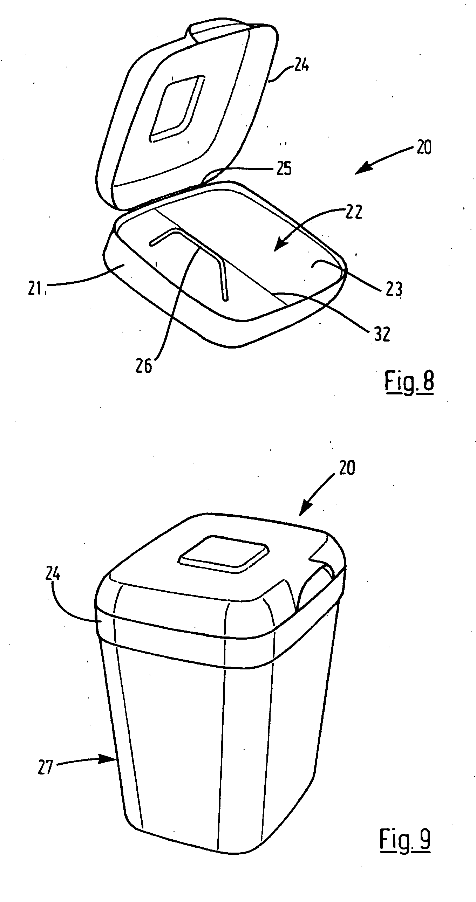

Figure 8 shows an embodiment of a lid 20 according to another concept of manufacturing. This lid 20 is comprised of a lid body 21 with an opening 22 which provides access to the contents of the container when the lid body is mounted on the container, and a membrane 23 to cover the opening. The lid could also comprise a resealing lid 24 to reseal the lid body 21 once the membrane 23 has been removed. In this example, the resealing lid 24 is connected to the lid body 21 via a hinge 25. As in the previous embodiment, the membrane 23 is arranged with a pull tab 26 which allows the consumer to apply tension to the membrane 23 and remove it from the lid body 21. Figure 9 shows the lid 20 mounted on a container 27.

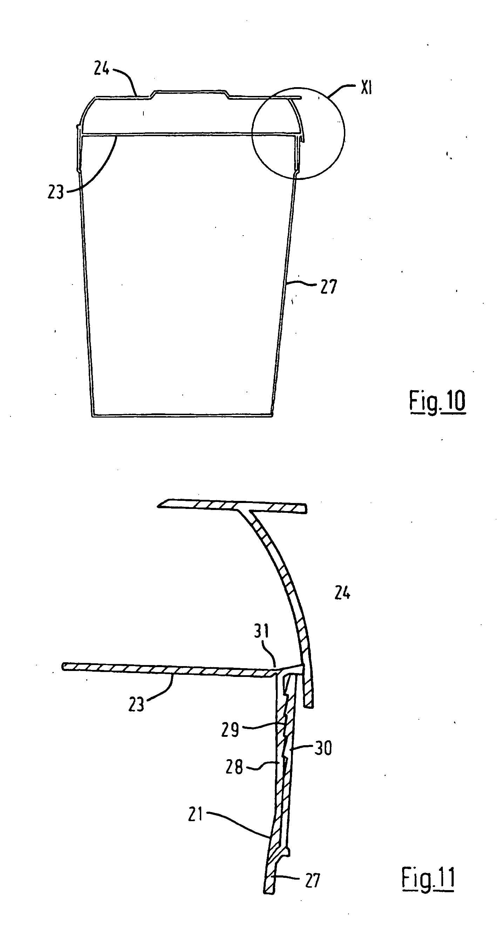

As can be seen in figure 10 and 11, a downwardly protruding flange 28 on the lid body 21 is, in this case, inserted into the container 27. A series of teeth 29 on the downwardly protruding flange engage with corresponding teeth 30 on the container 27. In this way, the lid 20 is prevented from being removed once it has been mounted on the container 27 without damaging the lid in the removal process.

The membrane 23, in this embodiment, is made from a thin foil and a weakened area 31 around the periphery of the membrane allows the membrane 23 to be removed from the lid body 21. The foil can be pre-printed with labeling if desired. In this embodiment, the membrane 23 is formed with a split line 32 allowing a two step removal process and a pouring function. The lid body 21 is made from a plastic material and is injection moulded.

As with the current invention, the membrane 23 and the lid body 21 are joined together during the injection moulding operation. However, in the current embodiment, the completed membrane 23 is inserted into the lid body 21 mould (not shown). Once the membrane 23 has been inserted, plastic is injected, thereby forming the lid body 21 around the membrane. In this way, the lid body 21 and the membrane 23 become a unified body in a single operation. In addition, a very effective seal is established between the membrane 23 and the lid body 21.

In order to optimize the connection between the lid body and the membrane, the material of the membrane can be chosen from a material which fuses together with the lid body during the injection moulding process due to the heat present during the injection moulding process. In another example, the lid body can be injection moulded in such a way that the edge of the membrane is embedded in the material of the lid body. This would be a form of mechanical connection whereas the first connection would be a form of chemical connection.

It should be obvious to the person skilled in the art that the above described embodiments are only examples and many other embodiments according to the claims could also be imagined. The first two example embodiments being example embodiments of lids resulting from a first form of manufacturing process, the third embodiment being an example embodiment of a lid resulting from a second form of manufacturing process.

## Claims

1. A lid (2;16) for a container (1), said lid (2;16) comprising:
- an injection moulded lid body (4) which is mountable on the container such that an air-tight seal is formed between the container and the lid body, said lid body having an opening (5) through which the contents of the container are accessible once the lid is mounted on the container, and
- a membrane (6) which closes said opening in said lid body in an air-tight manner,
**characterized in that**,
- said lid further comprises a sealing ring (12;17) which is injection moulded between the membrane (6) and the lid body (4).

2. A lid (2;16) according to claim 1, **characterized in that** said sealing ring (12;17) is of a different material than that of the lid body (4) or of the membrane (6).

3. A lid (2;16) according to claim 1 or 2, **characterized in that** said membrane (6) is of a different material than said lid body (4).

4. A lid (2;16) according to any one of claims 1-3, **characterized in that** said membrane (6) comprises a weakened area (12,14;18).

5. A lid (2;16) according to any one of claims 1-4, **characterized in that** said lid body (4) is not removable from said container (1) after it has been mounted on said container.

6. A lid (2;16) according to any one of claims 1-5, **characterized in that** the sealing ring (12,15;17,19B) is in contact with both the container (1) and the lid when the lid is mounted on the container..

7. Method of manufacturing a lid (2;16) for a container (1), wherein a lid body (4) is injection moulded together with a membrane (6), and where the membrane and the lid body are joined together along the edges of the membrane during a step in the injection moulding process by injection moulding a sealing ring (12;17) between the membrane (6) and the lid body (4).

8. Method of manufacturing a lid (2;16) according to claim 7 **characterized in that** said membrane (6) is inserted into the mould prior to injection moulding the lid body (4).

9. Method of manufacturing a lid (2;16) according to claim 7 **characterized in that** said membrane (6) and said lid body (4) are injection moulded at the same time.

10. Method of filling and sealing a container (1) comprising the steps of:
- filling a container (1), and
- snapping a lid (2;16) according to any one of claims 1-6 onto said container.

## Patentansprüche

1. Deckel (2;16) für einen Behälter (1), wobei der genannte Deckel (2;16) umfasst:
einen Deckelkörper (4) aus Spritzguss, welcher auf dem Behälter festgelegt werden kann, sodass eine luftdichte Verbindung zwischen dem Behälter und dem Deckelkörper ausgebildet wird, wobei der genannte Deckelkörper eine Öffnung (5) hat, durch welche der Inhalt des Behälters zugänglich ist, sobald der Deckel auf dem Behälter montiert ist, und
- eine Membran (6), welche die genannte Öffnung in dem genannten Deckelkörper luftdicht verschließt, **dadurch gekennzeichnet, dass**
- der genannte Deckel weiters einen Dichtungsring (12;17) umfasst, welcher zwischen die Membran (6) und den Deckelkörper (4) spritzgegossen ist.

2. Deckel (2;16) nach Anspruch 1, **dadurch gekennzeichnet, dass** der genannte Dichtungsring (12;17) aus einem anderen Material ist als jenes des Deckelkörpers (4) oder der Membran (6).

3. Deckel (2;16) nach Anspruch 1 oder 2, **dadurch gekennzeichnet, dass** die genannte Membran (6) aus einem anderen Material ist als der genannte Deckelkörper (4).

4. Deckel (2;16) nach einem der Ansprüche 1 bis 3, **dadurch gekennzeichnet, dass** die genannte Membran (6) einen geschwächten Bereich (12,14;18) aufweist.

5. Deckel (2;16) nach einem der Ansprüche 1 bis 4, **dadurch gekennzeichnet, dass** der genannte Deckelkörper (4) nicht vom Behälter (1) entfernt werden kann, nachdem er auf dem Behälter montiert worden ist.

6. Deckel (2;16) nach einem der Ansprüche 1 bis 5, **dadurch gekennzeichnet, dass** der Dichtungsring (12,15;17,19B) sowohl mit dem Behälter (1) als auch mit dem Deckel in Kontakt steht, wenn der Deckel auf dem Behälter montiert ist.

7. Verfahren zur Herstellung eines Deckels (2;16) für einen Behälter (1), wobei ein Deckelkörper (4) gemeinsam mit einer Membran (6) spritzgegossen wird und wobei die Membran und der Deckelkörper entlang der Kanten der Membran während eines Verfahrensschrittes im Spritzguss-Prozess durch Spritzgießen eines Dichtungsringes (12;17) zwischen der Membran(6) und dem Deckelkörper (4) miteinander verbunden werden.

8. Verfahren zur Herstellung eines Deckels (2;16) nach Anspruch 7, **dadurch gekennzeichnet, dass** die genannte Membran (6) vor dem Spritzgießen des Deckelkörpers (4) in die Form eingesetzt wird.

9. Verfahren zur Herstellung eines Deckels (2;16) nach Anspruch 7, **dadurch gekennzeichnet, dass** die genannte Membran (6) und der genannte Deckelkörper (4) gleichzeitig spritzgegossen werden.

10. Verfahren zum Befüllen und Dichten eines Behälters (1) umfassend die Schritte:
- Befüllen eines Behälters (1), und
- Aufrasten eines Deckels (2;16) nach einem der Ansprüche 1 bis 6 auf den genannten Behälter.

## Revendications

1. Couvercle (2; 16) pour un récipient (1), ledit couvercle (2; 16) comprenant:
- un corps (4) de couvercle moulé par injection qui peut être monté sur le récipient de telle manière qu'un joint étanche à l'air soit formé entre le récipient et le corps de couvercle, ledit corps de couvercle ayant une ouverture (5) par laquelle les contenus du récipient sont accessibles une fois que le couvercle est monté sur le récipient, et
- une membrane (6) qui ferme ladite ouverture dans ledit corps de couvercle de manière étanche à l'air,
**caractérisé en ce que**
- ledit couvercle comprend en outre une bague d'étanchéité (12; 17) qui est moulée par injection entre la membrane (6) et le corps (4) de couvercle.

2. Couvercle (2; 16) selon la revendication 1, **caractérisé en ce que** ladite bague d'étanchéité (12; 17) est réalisée dans une matière différente de celle du corps (4) de couvercle ou de la membrane (6).

3. Couvercle (2; 16) selon la revendication 1 ou 2, **caractérisé en ce que** ladite membrane (6) est réalisée dans une matière différente de celle du corps (4) de couvercle.

4. Couvercle (2; 16) selon l'une quelconque des revendications 1 - 3, **caractérisé en ce que** ladite membrane (6) comprend une zone affaiblie (12; 14; 18).

5. Couvercle (2; 16) selon l'une quelconque des revendications 1 - 4, **caractérisé en ce que** ledit corps (4) de couvercle ne peut être enlevé dudit récipient (1) après avoir été monté sur ledit récipient.

6. Couvercle (2; 16) selon l'une quelconque des revendications 1 - 5, **caractérisé en ce que** la bague d'étanchéité (12, 15; 17, 19B) est en contact avec le récipient (1) et le couvercle quand le couvercle est monté sur le récipient.

7. Procédé de fabrication d'un couvercle (2; 16) pour un récipient (1), dans lequel un corps (4) de couvercle est moulé par injection conjointement avec une membrane (6), et où la membrane et le corps de couvercle sont unis le long des bords de la membrane, pendant une étape du processus de moulage par injection, par moulage par injection d'une bague d'étanchéité (12; 17) entre la membrane (6) et le corps (4) de couvercle.

8. Procédé de fabrication d'un couvercle (2; 16) selon la revendication 7, **caractérisé en ce que** ladite membrane (6) est insérée dans le moule avant le moulage par injection du corps (4) de couvercle.

9. Procédé de fabrication d'un couvercle (2; 16) selon la revendication 7, **caractérisé en ce que** ladite membrane (6) et ledit corps (4) de couvercle sont moulés par injection en même temps.

10. Procédé de remplissage et de scellage d'un récipient (1) comprenant les étapes de:
- remplissage d'un récipient (1), et
- encliquetage d'un couvercle (2; 16) selon l'une quelconque des revendications 1 - 6 sur ledit récipient.
